# EUROPÄISCHE PATENTSCHRIFT

(11) **EP 0 725 091 B1**
(45) Veröffentlichungstag und Bekanntmachung des Hinweises auf die Patenterteilung: **08.09.1999**
(21) Anmeldenummer: 96100816.6
(22) Anmeldetag: 20.01.1996
(51) Int. Cl.: C08F 265/04, C08L 25/02, C08L 51/00

(54) **Formmassen mit verbesserter Tieftemperaturzähigkeit**
Moldings with improved low temperture toughening
Masses à mouler à ténacité à basse température améliorée

(30) Priorität: 01.02.1995 DE 19503117
(43) Veröffentlichungstag der Anmeldung: 07.08.1996
(73) Patentinhaber: BASF AKTIENGESELLSCHAFT, 67056 Ludwigshafen (DE)
(72) Erfinder: Fischer, Wolfgang, Dr., D-67067 Ludwigshafen (DE); Koch, Jürgen, Dr., D-67141 Neuhofen (DE); McKee, Graham E., Dr., D-67433 Neustadt (DE)

(56) Entgegenhaltungen:
- EP-A- 0 081 761
- EP-A- 0 160 285
- EP-A- 0 443 432

## Beschreibung

Die vorliegende Erfindung betrifft Pfropfcopolymerisat A, aufgebaut aus
a₁) 30 bis 90 Gew.-%, bezogen auf A), einer Pfropfgrundlage mit einer Glasübergangstemperatur von weniger als 10°C, erhalten aus
   a₁₁) 10 bis 99,8 Gew.-%, bezogen auf a₁), 2-Ethylhexylacrylat
   a₁₂) 0 bis 89,8 Gew.-%, bezogen auf a₁), eines weiteren, von a₁₁) verschiedenen Alkylacrylats mit 2 bis 32 C-Atomen im Alkylrest
   a₁₃) 0,2 bis 6 Gew.-%, bezogen auf a₁), eines mindestens zwei konjugierte Doppelbindungen enthaltenden Diens,
   a₁₄) 0 bis 10 Gew.-%, bezogen auf a₁), eines polyfunktionellen, vernetzend wirkenden Monomeren ohne konjugierte Doppelbindungen
   a₁₅) 0 bis 40 Gew.-%, bezogen auf a₁), weiterer copolymerisierbarer Monomerer
   und
a₂) 10 bis 70 Gew.-%, bezogen auf A), mindestens einer auf die Pfropfgrundlage aufgepfropften Hülle, aufgebaut aus
   a₂₁) 50 bis 95 Gew.-%, bezogen auf a₂), eines vinylaromatischen Monomeren,
   a₂₂) 5 bis 50 Gew.-%, bezogen auf a₂) polaren, copolymerisierbaren Comonomeren aus der Gruppe Acrylnitril, Methacrylnitril, Ester der (Meth)acrylsäure mit 1 bis 20 C-Atomen im Alkylrest, Maleinsäureanhydrid, (Meth)acrylamid und/oder Vinylalkylether mit 1 bis 8 C-Atomen im Alkylrest.

Die Herstellung teilchenförmiger Pfropfpolymerisate aus einem kautschukelastischen Kern, d.h. einem Polymeren mit einer Glasübergangstemperatur von unter 0°C, und einer Pfropfhülle mit einer Glasübergangstemperatur von über 25°C (Glasübergangstemperatur ermittelt nach der DSC-Methode; K.H. Illers, Makromol. Chemie 127 (1969) S. 1) zum Beispiel durch Emulsionspolymerisation, ist bekannt. Hierzu wird zunächst durch Emulsionspolymerisation geeigneter Monomerer eine Pfropfgrundlage hergestellt. Die Monomeren, die die Pfropfhülle bilden sollen, werden dann in Gegenwart der Pfropfgrundlage so polymerisiert, daß ein möglichst hoher Anteil auf die Pfropfgrundlage aufgepfropft wird. Dabei werden die Monomeren für die Pfropfhülle im allgemeinen so gewählt, daß diese mit dem zu modifizierenden Thermoplasten verträglich oder teilverträglich ist. Die Herstellung solcher Schlagzähmodifier ist seit langem bekannt und z.B. in der EP 6 503, der EP 450 485, der US-PS 30 55 859 und der DE-PS 12 60 135 beschrieben.

Voraussetzung für eine Schlagzähigkeit bei tiefen Temperaturen ist eine möglichst niedrige Glasübergangstemperatur. Kautschuke auf Basis von Butadien (zum Beispiel ABS) weisen zwar niedrige Glasübergangstemperaturen auf, jedoch ist aufgrund ihres Doppelbindungsgehaltes in den Polymerhauptketten ihre Witterungsbeständigkeit nicht zufriedenstellend. Kautschuke auf Basis von Acrylsäureester-Polymerisaten weisen keine Doppelbindungen auf und besitzen aufgrund dessen eine gute Witterungsbeständigkeit. Allerdings sind die erreichten Kältezähigkeiten, insbesondere bei Einsatz von n-Butylacrylat, nicht in vollem Umfang befriedigend. In der Literatur sind zwar eine Fülle von Wegen aufgezeigt, wie die Zähigkeit von Acrylat-Kautschuken bei Raumtemperatur verbessert werden kann, nicht jedoch wie eine verbesserte Zähigkeit bei Temperaturen von unter -20°C erreicht werden kann. In der EP 534 211 wird eine Verbesserung der Kerbschlagzähigkeit von thermoplastischen Formmassen bei 0°C durch Einsatz von Pfropfkautschuken, die Monomere mit sauren Gruppen in der Pfropfgrundlage sowie Monomeren mit basischen Gruppen in der Pfropfhülle enthalten, beschrieben. Die so erhaltenen Formmassen weisen jedoch matte Oberflächen auf. Eine Übertragung der Ergebnisse zur Verbesserung der Zähigkeit bei Raumtemperatur auf Schlagzähigkeiten bei tiefen Temperaturen ist nicht ohne weiteres möglich. Der Einsatz von Ethylhexylacrylat bietet sich aufgrund seiner tiefen Glasübergangstemperatur an. Es sind jedoch bisher keine ethylhexylacrylathaltigen Pfropfcopolymerisate beschrieben, die zu einer befriedigenden Kältezähigkeit von thermoplastischen Formmassen, insbesondere von Copolymerisaten aus Styrol und Acrylnitril, führen.

Der vorliegenden Erfindung lag daher die Aufgabe zugrunde, Pfropfcopolymerisate auf Acrylat-Basis mit verbesserter Schlagzähigkeit bei tiefen Temperaturen zur Verfügung zu stellen.

Diese Aufgabe wurde erfindungsgemäß mit den Pfropfcopolymerisaten gemäß Anspruch 1 gelöst.

Bevorzugte Pfropfcopolymerisate und diese enthaltende Formmassen dieser Art sind den Unteransprüchen zu entnehmen.

Die erfindungsgemäßen Pfropfcopolymerisate sind aufgebaut aus 30 bis 90, vorzugsweise 40 bis 85 und insbesondere 40 bis 75 Gew.-% einer Pfropfgrundlage a₁) mit einer Glasübergangstemperatur von unter 10°C und 10 bis 70, vorzugsweise 15 bis 60 und insbesondere 25 bis 60 Gew.-% mindestens einer auf die Pfropfgrundlage a₁) aufgepfropften Hülle a₂).

Die Pfropfgrundlage wird hergestellt aus einem Monomerengemisch aus
a₁₁) 10 bis 99,8 Gew.-%, bezogen auf a₁), 2-Ethylhexylacrylat
a₁₂) 0 bis 89,8 Gew.-%, bezogen auf a₁), eines weiteren, von a₁₁) verschiedenen Alkylacrylats mit 2 bis 32 C-Atomen im Alkylrest
a₁₃) 0,2 bis 6 Gew.-%, bezogen auf a₁), eines mindestens zwei konjugierte Doppelbindungen enthaltenden Diens,
a₁₄) 0 bis 10 Gew.-%, bezogen auf a₁), eines polyfunktionellen, vernetzend wirkenden Monomeren ohne konjugierte Doppelbindungen
a₁₅) 0 bis 40 Gew.-%, bezogen auf a₁), weiterer copolymerisierbarer Monomerer.

Beim Monomer a₁₁), welches bevorzugt in einer Menge von 20 bis 99,5, insbesondere von 30 bis 99,5 Gew.-%, bezogen auf a₁) enthalten ist, handelt es sich um 2-Ethylhexylacrylat.

Bevorzugte Monomere a₁₂), deren Anteil bis zu 89,8, vorzugsweise bis zu 79,5 und insbesondere 20 bis 69,5 Gew.-%, bezogen auf a₁), beträgt, sind Alkylacrylate mit 2 bis 32 C-Atomen im Alkylrest, insbesondere Ethylacrylat und tert.-, iso- und n-Butylacrylat, wovon das letztgenannte besonders bevorzugt wird.

Als Komponente a₁₃) werden bei der Herstellung der Pfropfgrundlage 0,2 bis 6, vorzugsweise 0,3 bis 5,5 und insbesondere 0,5 bis 5 Gew.-% eines mindestens zwei konjugierte Doppelbindungen enthaltenden Diens eingesetzt. Hier seien beispielsweise Butadien, Isopren und Chloropren genannt, wobei die beiden erstgenannten besonders bevorzugt werden.

Beispielhaft für vernetzend wirkende polyfunktionelle Monomere a₁₄), deren Anteil bis zu 10, vorzugsweise 0,1 bis 5 Gew.-%, bezogen auf a₁), beträgt, seien Divinylbenzol, Diallylmaleat, Diallylfumarat, Diallylphthalat und Dihydrodicyclopentadienylacrylat (DCPA, wie in der DE-A 12 60 135 beschrieben) genannt, wobei letzteres bevorzugt wird. Weiterhin eignen sich Acrylsäureester mehrwertiger linearer aliphatischer Alkohole wie Ethylenglykoldiacrylat und Butandioldiacrylat.

Schließlich kann die Monomerenmischung noch bis zu 40, vorzugsweise bis zu 30 Gew.-% weiterer Monomerer a₁₅) enthalten.

Als bevorzugte Monomere a₁₅) seien Styrol, Acrylnitril, Methacrylnitril und/oder Vinylalkylether mit 1 bis 8 C-Atomen im Alkylrest (z.B. Vinylmethylether, Vinylpropylether, Vinylethylether) oder Mischungen derselben genannt.

Durch Verwendung der Comonomere a₁₃) und a₁₄) läßt sich das Eigenschaftsprofil der Polymerisate a₁) z.B. hinsichtlich Vernetzungsgrad steuern, was in manchen Fällen wünschenswert sein kann.

Verfahren zur Herstellung von Polymeren a₁) sind dem Fachmann bekannt, und in der Literatur beschrieben, z.B. in der DE-PS 1 260 135, US-A 3,691,260 und EP 81761.

Als besonders vorteilhaft hat sich in einigen Fällen die Herstellung durch Emulsionspolymerisation erwiesen.

Ein bevorzugtes Verfahren ist nachstehend kurz beschrieben.

Als Pfropfgrundlage wird der oder die Acrylsäureester und die restlichen Monomere in wäßriger Emulsion bei 20 bis 100°C, bevorzugt zwischen 50 und 80°C, gegebenenfalls in Gegenwart eines Saatlatex, polymerisiert. Die Monomerenmischung wird kontinuierlich zum Reaktionsgemisch zudosiert. Es können die üblichen Emulgatoren wie die Alkalisalze von Alkyl- oder Alkylarylsulfonsäuren, Alkylsulfate, Fettalkoholsulfonate, Salze höherer Fettsäuren mit 10 bis 30 Kohlenstoffatomen oder Harzseifen verwendet werden. Vorzugsweise nimmt man die Kalium- oder Natriumsalze von Alkylsulfonaten oder von Fettsäuren mit 10 bis 18 Kohlenstoffatomen. Es ist günstig, die Emulgatoren in einer Menge von 0,5 bis 5 Gew.-%, insbesondere von 1 bis 2 Gew.-%, bezogen auf das Gesamtgewicht der für die Herstellung der Pfropfgrundlage verwendeten Monomeren, einzusetzen. Im allgemeinen wird bei einem Wasser/Monomer-Verhältnis von 2:1 bis 0,7:1 gearbeitet. Als Polymerisationsinitiatoren dienen insbesondere die gebräuchlichen Persulfate, wie z.B. Kaliumperoxodisulfat; es sind jedoch auch Redoxsysteme geeignet. Die Menge an Initiatoren (z.B. 0,1 bis 2,5 Gew.-%, bezogen auf das Gesamtgewicht der Monomeren) richtet sich in bekannter Weise nach dem gewünschten Molgewicht.

Als Polymerisationshilfsstoffe können die üblichen Puffersubstanzen, durch welche pH-Werte von vorzugsweise 6 bis 9 eingestellt werden, z.B. Natriumbicarbonat und Natriumpyrophosphat, sowie bis 3 Gew.-% eines Molekulargewichtsreglers, wie Mercaptan, Terpinol oder dimeres α-Methylstyrol verwendet werden.

Die genauen Polymerisationsbedingungen, insbesondere Art, Dosierung und Menge des Emulgators werden vorzugsweise so gewählt, daß der Latex des Acrylsäureesters, der zumindest teilweise vernetzt ist, eine mittlere Teilchengröße (Gewichtsmittel d₅₀) im Bereich von etwa 50 bis 700, insbesondere von 100 bis 600 nm aufweist. (bestimmt nach Scholtan & Lange, Kolloid. Z. und Z. Polymere 250 (1972), 782-796).

Auf die Pfropfgrundlage a₁) ist eine Pfropfhülle a₂) aufgepfropft, die durch Copolymerisation von
a₂₁) 50 bis 95, vorzugsweise 60 bis 90 und insbesondere 65 bis 80 Gew.-% eines vinylaromatischen Monomeren, vorzugsweise Styrol oder substituierten Styrolen der allgemeinen Formel I 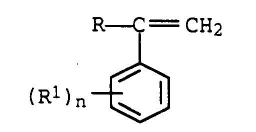 wobei R einen Alkylrest mit 1 bis 8 C-Atomen, ein Wasserstoffatom oder Halogen und R¹ Alkylreste mit 1 bis 8 C-Atomen oder ein Halogenatom darstellen und n den Wert 0, 1, 2 oder 3 hat, und
a₂₂) 5 bis 50, vorzugsweise 10 bis 40 und insbesondere 20 bis 35 Gew.-% polaren copolymerisierbaren Monomeren Acrylnitril, Methacrylnitril, Ester der Meth(acrylsäure) mit 1 bis 20 C-Atomen im Alkylrest, Maleinsäureanhydrid, (Meth)acrylamid Vinylalkylether mit 1-8 C-Atomen im Alkylrest und/oder Phenylmaleinimid oder deren Mischungen
erhalten wird.

Die Pfropfhülle a₂) kann in einem oder in mehreren, z.B. zwei oder drei, Verfahrensschritten hergestellt werden, die Bruttozusammensetzung bleibt davon unberührt.

Vorzugsweise wird die Pfropfhülle in Emulsion hergestellt, wie dies z.B. in der DE-PS 1 260 135, DE-OS 32 27 555, DE-OS 31 49 357 und der DE-OS 34 14 118 beschrieben ist.

Je nach den gewählten Bedingungen entsteht bei der Pfropfmischpolymerisation ein bestimmter Anteil an freien Copolymerisaten von Styrol und Acrylnitril.

Das Pfropfmischpolymerisat (a₁ + a₂) weist im allgemeinen eine mittlere Teilchengröße von vorzugsweise 50 bis 1000 nm, insbesondere von 100 bis 700 nm (d₅₀-Gewichtsmittelwert) auf. Die Bedingungen bei der Herstellung des Elastomeren a₁) und bei der Pfropfung werden daher vorzugsweise so gewählt, daß Teilchengrößen in diesem Bereich resultieren. Maßnahmen hierzu sind bekannt und z.B. in der DE-PS 1 260 135 und der DE-OS 28 26 925 sowie in Journal of Applied Polymer Science, Vol. 9 (1965), S. 2929 bis 2938, beschrieben. Die Teilchenvergrößerung des Latex des Elastomeren kann z.B. mittels Agglomeration bewerkstelligt werden.

In einigen Fällen haben sich auch Mischungen aus mehreren Acrylester-Polymerisaten bewährt, die unterschiedliche Teilchengrößen aufweisen. Entsprechende Produkte sind in der DE-OS 28 26 925 und dem US-Patent 5,196,480 beschrieben, auf die hier wegen näherer Details verwiesen sei.

Demzufolge werden als bevorzugte Mischungen von Acrylesterpolymerisaten solche eingesetzt, in denen ein erstes Polymer eine Teilchengröße d₅₀ im Bereich von 50 bis 150 nm und ein zweites Polymer eine Teilchengröße von 200 bis 700 nm aufweist, wie sie in der bereits erwähnten US-PS 5,196,480 beschrieben werden.

Die erfindungsgemäßen Pfropfcopolymerisate A) eignen sich besonders zur Schlagzähmodifizierung von thermoplastischen Polymeren B) mit einer Glasübergangstemperatur von mehr als 20°C.

Die so erhaltenen erfindungsgemäßen Formmassen enthalten 10 bis 70, vorzugsweise 15 bis 60, und insbesondere 20 bis 60 Gew.-% eines erfindungsgemäßen Pfropfcopolymerisats A).

Der Gehalt solcher erfindungsgemäßer thermoplastischer Formmassen an solchen Polymeren B) beträgt 30 bis 90, vorzugsweise 30 bis 85 und insbesondere 30 bis 80 Gew.-%. Obwohl grundsätzlich jedes Polymerisat B), welches eine solche Glasübergangstemperatur aufweist, mit der Komponente A) abgemischt werden kann, haben sich Copolymerisate B) aus 50 bis 95, vorzugsweise 55 bis 90 und insbesondere 60 bis 85 Gew.-% vinylaromatischen Monomeren und 5 bis 50, vorzugsweise 10 bis 45 und besonders bevorzugt 15 bis 40 Gew.-% polaren copolymerisierbaren Monomeren aus der Gruppe Acrylnitril, Methacrylnitril, Ester der (Meth)Acrylsäure mit 1 bis 4 C-Atomen in Alkylrest, Maleinsäureanhydrid, (Meth)acrylamid, Vinylalkylether mit 1 bis 8 C-Atomen im Alkylrest und/oder Phenylmaleinimid oder deren Mischungen bewährt.

Als vinylaromatische Monomere haben sich Styrol und substituierte Styrole der allgemeinen Formel 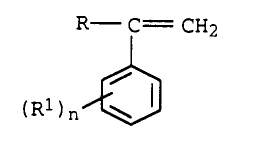 wobei R einen Alkylrest mit 1 bis 8 C-Atomen, ein Wasserstoffatom oder Halogen und R¹ Alkylreste mit 1 bis 8 C-Atomen oder ein Halogenatom darstellen, und n den Wert 0,1, 2 oder 3 hat, bewährt.

In einer bevorzugten Ausführungsform werden als vinylaromatische Monomere Styrol und/oder α-Methylstyrol (Komponente b₁)) sowie als Komponente b₂₁) Acrylnitril, Methacrylnitril, Methylacrylat und/oder Methylmethacrylat verwendet.

Die Komponente B) kann weiterhin bis zu 40 Gew.-% andere Monomere b₂₂) enthalten. Als Monomere b₂₂) kommen Ester der Acrylsäure bzw. der Methacrylsäure mit 5 bis 20 C-Atomen im Alkylrest und/oder Phenylmaleinimid in Betracht.

Als Komponente C) können die erfindungsgemäßen Formmassen 0 bis 50, vorzugsweise 5 bis 45 und insbesondere 10 bis 40 Gew.-% faser- oder teilchenförmige Füllstoffe oder deren Mischungen enthalten.

Als Beispiele für Füllstoffe seien Kohlenstoff- oder Glasfasern in Form von Glasgeweben, Glasmatten oder Glasseidenrovings, Glaskugeln sowie Wollastonit genannt, besonders bevorzugt Glasfasern.

Bei der Verwendung von Glasfasern können diese zur besseren Verträglichkeit mit den Blendkomponenten mit einer Schlichte und einem Haftvermittler ausgerüstet sein. Im allgemeinen haben die verwendeten Kohlenstoff- und Glasfasern einen Durchmesser im Bereich von 6 bis 20 µm.

Die Einarbeitung der Glasfasern kann sowohl in Form von Kurzglasfasern als auch in Form von Endlossträngen (Rovings) erfolgen. Die mittlere Länge der Glasfasern liegt im allgemeinen im Bereich von 0,05 bis 0,5 mm, vorzugsweise von 0,08 bis 0,45 mm (im Spritzgußteil).

Als teilchenförmige Füllstoffe eignen sich amorphe Kieselsäure, Asbest, Magnesiumcarbonat (Kreide), gepulverter Quarz, Glimmer, Talkum, Feldspat und insbesondere Calciumsilikate wie Wollastonit und Kaolin (vorzugsweise kalzinierter Kaolin).

Bevorzugte Kombinationen von Füllstoffen sind z.B. 20 Gew.-% Glasfasern mit 15 Gew.-% Wollastonit und 15 Gew.-% Glasfasern mit 15 Gew.-% Wollastonit.

Als Komponente D) können in den erfindungsgemäßen thermoplastischen Formmassen bis zu 30, vorzugsweise 0,5 bis 10 Gew.-% übliche Zusatzstoffe und Verarbeitungshilfsmittel enthalten sein.

Übliche Zusatzstoffe sind beispielsweise Stabilisatoren und Oxidationsverzögerer, Mittel gegen Wärmezersetzung und Zersetzung durch ultraviolettes Licht, Gleit- und Entformungsmittel, Färbemittel, wie Farbstoffe und Pigmente, pulverförmige Füll- und Verstärkungsmittel, Weichmacher. Solche Zusatzstoffe werden in den üblichen wirksamen Mengen eingesetzt.

Die Stabilisatoren können den Massen in jedem Stadium der Herstellung der thermoplastischen Massen zugesetzt werden. Vorzugsweise werden die Stabilisatoren zu einem frühen Zeitpunkt zugesetzt, um zu verhindern, daß die Zersetzung bereits beginnt, bevor die Masse geschützt werden kann.

Zu den Oxidationsverzögerern und Wärmestabilisatoren, die den thermoplastischen Massen gemäß der Erfindung zugesetzt werden können, gehören diejenigen, die allgemein zu Polymeren zugesetzt werden, wie sterisch gehinderte Phenole, Hydrochinone, verschiedene substituierte Vertreter dieser Gruppe um Kombinationen derselben in Konzentrationen bis 1 Gew.-%, bezogen auf das Gewicht der Mischung.

Als Stabilisatoren kann man ebenfalls diejenigen, die allgemein zu Polymeren zugesetzt werden, in Mengen bis zu 2,0 Gew.-% auf die Mischung verwenden.

Beispiele für Stabilisatoren sind verschiedene substituierte Resorcine, Salicylate, Benzotriazole, Benzophenone HALS-Stabilisatoren und dergleichen, wie sie unter den Handelsnamen Topanol®, Irganox® und Tinuvin® kommerziell erhältlich sind.

Geeignete Gleit- und Entformungsmittel, die z.B. in Mengen bis zu 7 Gew.-% der thermoplastischen Masse zugesetzt werden, sind Stearinsäuren, Stearylalkohol, Stearinsäureester und -amide.

Eine weiterer möglicher Zusatzstoff sind Siliconöle, vorzugsweise in Mengen von 0,05 bis 1 Gew.-%.

Ferner können zugesetzt werden organische Farbstoffe, wie Nigrosin, Pigmente, z.B. Titandioxid, Cadmiumsulfid, Cadmiumsulfid-selenid, Phthalocyanine Ultramarinblau oder Ruß.

Die Abmischung der Komponenten A), B) und gegebenenfalls C) und/oder D) erfolgt in der Regel nach an sich bekannten und in der Literatur beschriebenen Verfahren in der Schmelze, vorzugsweise auf Extrudern.

Die erfindungsgemäßen Formmassen weisen gute Zähigkeiten bei tiefen Temperaturen und eine gute Witterungsbeständigkeit auf. Sie eignen sich daher zur Herstellung von Formkörpern aller Art, die in entsprechenden Anwendungen eingesetzt werden.

### Beispiele 1 bis 6

### Herstellung von Pfropfcopolymeren

### Beispiel 1

### Herstellung des Pfropfcopolymerisats A1

### 1.1 Herstellung der Pfropfgrundlage a₁)

156,8 g Ethylhexylacrylat und 3,2 g Butadien wurden in 1500 g Wasser unter Zusatz von 5 g des Kaliumsalzes einer C₁₂- bis C₁₈-Paraffinsulfonsäure, 3 g Kaliumperoxodisulfat, 3 g Natriumhydrogencarbonat und 1,5 g Natriumpyrophosphat unter Rühren auf 65°C erwärmt. 10 Minuten nach dem Anspringen der Polymerisationsreaktion wurden innerhalb von 3 Stunden ein Gemisch aus 823,2 g Ethylhexylacrylat und 16,8 g Butadien zudosiert. Nach Beendigung der Monomerzugabe wurde die Emulsion noch eine Stunde bei 65°C gehalten.

### 1.2 Herstellung der erfindungsgemäßen Pfropfpolymerisate

2100 g der nach obiger Vorschrift (1.1.) hergestellten Emulsion wurden mit 1150 g Wasser, 2,7 g Kaliumperoxodisulfat gemischt und unter Rühren auf 65°C erwärmt. Nach Erreichen der Reaktionstemperatur wurden im Lauf von 3 Stunden ein Monomerengemisch aus 495 g Styrol und 165 g Acrylnitril zudosiert. Nach Beendigung der Zugabe wurde die Emulsion noch 2 Stunden bei 65°C gehalten. Das Pfropfpolymerisat wurde mittels Calciumchloridlösung bei 95°C aus der Emulsion gefällt, mit Wasser gewaschen und im warmen Luftstrom getrocknet.

### Beispiel 2

### Herstellung des Pfropfcopolymerisats A2

Die Herstellung der Pfropfgrundlage erfolgte wie unter 1.1. beschrieben. Es wurden jedoch zusätzlich 10 g Acrylsäureester des Tricyclodecenylalkohols gleichzeitig mit den anderen Monomeren zudosiert.

Die Herstellung der Pfropfhülle erfolgte wie unter 1.2. beschrieben.

### Beispiel 3

### Herstellung des Pfropfcopolymerisats A3

Die Herstellung der Pfropfgrundlage erfolgte wie unter 1.1. beschrieben. Es wurden jedoch zusätzlich 20 g Acrylsäureester des Tricyclodecenylalkohols gleichzeitig mit den anderen Monomeren zudosiert.

Die Herstellung der Pfropfhülle erfolgte wie unter 1.2. beschrieben.

### Beispiel 4

### Herstellung des Pfropfcopolymerisats A4

117,6 g Ethylhexylacrylat, 39,2 g n-Butylacrylat und 3,2 g Butadien wurden in 1500 g Wasser unter Zusatz von 5 g des Kaliumsalzes einer C₁₂- bis C₁₈-Paraffinsulfonsäure, 3 g Kaliumperoxodisulfat, 3 g Natriumhydrogencarbonat und 1,5 g Natriumpyrophosphat unter Rühren auf 65°C erwärmt. 10 Minuten nach dem Anspringen der Polymerisationsreaktion wurden innerhalb von 3 Stunden ein Gemisch aus 658,6 g Ethylhexylacrylat, 164,6 g n-Butylacrylat und 16,8 g Butadien zudosiert. Nach Beendigung der Monomerzugabe wurde die Emulsion noch eine Stunde bei 65°C gehalten.

Die Herstellung der Pfropfhülle erfolgte wie unter 1.2. beschrieben.

### Beispiel 5

### Herstellung des Vergleichs-Pfropfcopolymerisats A/V1

### 5.1. Herstellung der Pfropfgrundlage

156,8 g Acrylsäurebutylester und 3,2 g Acrylsäureester des Tricyclodecenylalkohols wurden in 1500 g Wasser unter Zusatz von 5 g des Kaliumsalzes einer C₁₂- bis C₁₈-Paraffinsulfonsäure, 3 g Kaliumperoxodisulfat, 3 g Natriumhydrogencarbonat und 1,5 g Natriumpyrophosphat unter Rühren auf 65°C erwärmt. 10 Minuten nach dem Anspringen der Polymerisationsreaktion wurden innerhalb von 3 Stunden ein Gemisch aus 823,2 g Acrylsäurebutylester und 16,8 g Acrylsäureester des Tricyclodecenylalkohols zudosiert. Nach Beendigung der Monomerzugabe wurde die Emulsion noch eine Stunde bei 65°C gehalten.

### 5.2 Herstellung der Pfropfhülle

2100 g der nach obiger Vorschrift (5.1.) hergestellten Emulsion wurden mit 1150 g Wasser, 2,7 g Kaliumperoxodisulfat gemischt und unter Rühren auf 65°C erwärmt. Nach Erreichen der Reaktionstemperatur wurden im Lauf von 3 Stunden ein Monomerengemisch aus 495 g Styrol und 165 g Acrylnitril zudosiert. Nach Beendigung der Zugabe wurde die Emulsion noch 2 Stunden bei 65°C gehalten. Das Pfropfpolymerisat wurde mittels Calciumchloridlösung bei 95°C aus der Emulsion gefällt, mit Wasser gewaschen und im warmen Luftstrom getrocknet.

### Beispiel 6

### Herstellung des Vergleichs-Pfropfcopolymerisats A/V2

### 6.1 Herstellung der Pfropfgrundlage

156,8 g Ethylhexylacrylat und 3,2 g Acrylsäureester des Tricyclodecenylalkohols wurden in 1500 g Wasser unter Zusatz von 5 g des Kaliumsalzes einer C₁₂- bis C₁₈-Paraffinsulfonsäure, 3 g Kaliumperoxodisulfat, 3 g Natriumhydrogencarbonat und 1,5 g Natriumpyrophosphat unter Rühren auf 65°C erwärmt. 10 Minuten nach dem Anspringen der Polymerisationsreaktion wurden innerhalb von 3 Stunden ein Gemisch aus 823,2 g Ethylhexylacrylat und 16,8 g Acrylsäureester des Tricyclodecenylalkohols zudosiert. Nach Beendigung der Monomerzugabe wurde die Emulsion noch eine Stunde bei 65°C gehalten.

Die Herstellung der Pfropfhülle erfolgte wie unter 5.2. beschrieben.

### Beispiele 7

### Herstellung erfindungsgemäßer thermoplastischer Formmassen

Zur Herstellung der Abmischungen wurden die Pfropfkautschuke mit einem Styrol/Acrylnitril-Copolymerisat mit einem Acrylnitril-Gehalt von 35 % und einer Viskositätszahl von 80 ml/g (die Viskositätszahlen wurden an einer 0,5 %igen Lösung in DMF bei 23°C bestimmt) verwendet. Die gefällten und getrockneten Pfropfmischpolymerisate wurden zusammen mit dem Matrix-Polymeren auf einem Extruder bei 260°C so abgemischt, daß der Gehalt an Matrix-Polymeren im Endprodukt 50 Gew.-%, bezogen auf die Gesamtmischung, betrug.

Die Schlagzähigkeiten aₙ (in kJm²) der Produkte wurden nach ISO 179 an bei 220°C und 280°C gespritzten ISO-Stäben (80 mm x 10 mm x 4 mm) bei -40°C gemessen. Die Ergebnisse sind in der folgenden Tabelle zusammengefaßt.

**Tabelle**

| Spritztemperatur | aₙ[kJ/m²] (-40°C) | |
|---|---|---|
| | 220°C | 280°C |
| Abmischung mit A1 | 135 | 154 |
| Abmischung mit A2 | 149 | 173 |
| Abmischung mit A3 | 154 | 171 |
| Abmischung mit A4 | 151 | 166 |
| Abmischung mit A/V1 | 90 | 130 |
| Abmischung mit A/V2 | 75 | 95 |

## Patentansprüche

1. Pfropfcopolymerisat A, aufgebaut aus
a₁) 30 bis 90 Gew.-%, bezogen auf A), einer Pfropfgrundlage mit einer Glasübergangstemperatur von weniger als 10°C, erhalten aus
a₁₁) 10 bis 99,8 Gew.-%, bezogen auf a₁), 2-Ethylhexylacrylat
a₁₂) 0 bis 89,8 Gew.-%, bezogen auf a₁), eines weiteren, von a₁₁) verschiedenen Alkylacrylats mit 2 bis 32 C-Atomen im Alkylrest
a₁₃) 0,2 bis 6 Gew.-%, bezogen auf a₁), eines mindestens zwei konjugierte Doppelbindungen enthaltenden Diens,
a₁₄) 0 bis 10 Gew.-%, bezogen auf a₁), eines polyfunktionellen, vernetzend wirkenden Monomeren ohne konjugierte Doppelbindungen
a₁₅) 0 bis 40 Gew.-%, bezogen auf a₁), weiterer copolymerisierbarer Monomerer
und
a₂) 10 bis 70 Gew.-%, bezogen auf A), mindestens einer auf die Pfropfgrundlage aufgepfropften Hülle, aufgebaut aus
a₂₁) 50 bis 95 Gew.-%, bezogen auf a₂), eines vinylaromatischen Monomeren,
a₂₂) 5 bis 50 Gew.-%, bezogen auf a₂) polaren, copolymerisierbaren Comonomeren aus der Gruppe Acrylnitril, Methacrylnitril, Ester der (Meth)acrylsäure mit 1 bis 20 C-Atomen im Alkylrest, Maleinsäureanhydrid, (Meth)acrylamid und/oder Vinylalkylether mit 1 bis 8 C-Atomen im Alkylrest.

2. Thermoplastische Formmassen, enthaltend
A) 10 bis 70 Gew.-%, bezogen auf das Gesamtgewicht der Formmasse, eines Pfropfcopolymerisats gemäß Anspruch 1,
B) 30 bis 90 Gew.-%, bezogen auf das Gesamtgewicht der Formmassen, eines thermoplatischen Polymerisats mit einer Glasübergangstemperatur von mehr als 20°C,
C) 0 bis 50 Gew.-% faser- oder teilchenförmige Füllstoffe oder deren Mischungen und
D) 0 bis 30 Gew.-% übliche Zusatzstoffe und Verarbeitungshilfsmittel.

3. Thermoplastische Formmassen nach Anspruch 2, enthaltend als Komponente B) ein Copolymerisat aus
b₁) 50 bis 95 Gew.-% Styrol und/oder α-Methylstyrol und
b₂₁) 5 bis 50 Gew.-% (Meth)acrylnitril und/oder Methyl (meth) acrylat
b₂₂) 0 bis 40 Gew.-% andere Monomere.

4. Verwendung der thermoplastischen Formmassen gemäß Anspruch 2 oder 3 zur Herstellung von Folien und Formkörpern.

## Claims

1. A graft copolymer A composed of
a₁) from 30 to 90% by weight, based on A), of a grafting base having a glass transition temperature of less than 10°C, obtained from
a₁₁) from 10 to 99.8% by weight, based on a₁), of 2-ethylhexyl acrylate,
a₁₂) from 0 to 89.8% by weight, based on a₁), of a further alkyl acrylate which differs from a₁₁) and in which the alkyl radical is of 2 to 32 carbon atoms,
a₁₃) from 0.2 to 6% by weight, based on a₁), of a diene containing at least two conjugated double bonds,
a₁₄) from 0 to 10% by weight, based on a₁), of a polyfunctional monomer having a crosslinking action and without conjugated double bonds and
a₁₅) from 0 to 40% by weight, based on a₁), of further copolymerizable monomers
and
a₂) from 10 to 70% by weight, based on A), of at least one shell grafted onto the grafting base and composed of
a₂₁) from 50 to 95% by weight, based on a₂), of a vinylaromatic monomer and
a₂₂) from 5 to 50% by weight, based on a₂), of polar, copolymerizable comonomers selected from the group consisting of acrylonitrile, methacrylonitrile, esters of (meth)acrylic acid where the alkyl radical is of 1 to 20 carbon atoms, maleic anhydride, (meth)acrylamide and vinyl alkyl ethers where the alkyl radical is of 1 to 8 carbon atoms.

2. A thermoplastic molding material containing
A) from 10 to 70% by weight, based on the total weight of the molding material, of a graft copolymer as claimed in claim 1,
B) from 30 to 90% by weight, based on the total weight of the molding material, of a thermoplastic polymer having a glass transition temeprature of more than 20°C,
C) from 0 to 50% by weight of fibrous or particulate fillers or of mixtures thereof and
D) from 0 to 30% by weight of conventional additives and processing assistants.

3. A thermoplastic molding material as claimed in claim 2, containing, as component B), a copolymer of
b₁) from 50 to 95% by weight of styrene or α-methylstyrene and
b₂₁) from 5 to 50% by weight of (meth)acrylonitrile or methyl (meth)acrylate or
b₂₂) from 0 to 40% by weight of other monomers.

4. Use of the thermoplastic molding materials as claimed in claim 2 or 3 for the production of films and moldings.

## Revendications

1. Copolymère greffé A, construit à partir de
a₁) 30-90% en poids, par rapport à A), d'une base de greffage ayant une température de transition vitreuse de moins de 10°C, obtenue à partir de
a₁₁) 10-99,8% en poids, par rapport à a₁), d'acrylate de 2-éthylhexyle,
a₁₂) 0-89,8% en poids, par rapport à a₁), d'un autre acrylate d'alkyle, différent de a₁₁), ayant 2-32 atomes de carbone dans le reste alkyle,
a₁₃) 0,2-6% en poids, par rapport à a₁), d'un diène contenant au moins deux doubles liaisons conjuguées,
a₁₄) 0-10% en poids, par rapport à a₁), d'un monomère polyfonctionnel à action réticulante, ne comportant pas de doubles liaisons conjuguées,
a₁₅) 0-40% en poids, par rapport à a₁), d'autres monomères copolymérisables,
et
a₂) 10-70% en poids, par rapport à A), d'au moins une enveloppe de greffage greffée sur la base de greffage, construite à partir de
a₂₁) 50-95% en poids, par rapport à a₂), d'un monomère vinylaromatique,
a₂₂) 5-50% en poids, par rapport à a₂), de comonomères polaires, copolymérisables choisis dans le groupe formé par l'acrylonitrile, le méthacrylonitrile, les esters de l'acide (méth)acrylique ayant 1-20 atomes de carbone dans le reste alkyle, l'anhydride maléique, le (méth)acrylamide et/ou les éthers de vinyle et d'alkyle, ayant 1-8 atomes de carbone dans le reste alkyle.

2. Masses à mouler thermoplastiques contenant
A) 10-70% en poids, par rapport au poids total de la masse à mouler, d'un copolymère greffé selon la revendication 1,
B) 30-90% en poids, par rapport au poids total de la masse à mouler, d'un polymère thermoplastique ayant une température de transition vitreuse de plus de 20°C,
C) 0-50% en poids, de matières de charge sous forme de fibres ou de particules ou leurs mélanges et
D) 0-30% en poids d'additifs usuels et d'agents auxiliaires de mise en oeuvre.

3. Masses à mouler thermoplastiques selon la revendication 2, contenant en tant que composant B) un copolymère construit à partir de
b₁) 50-95% en poids de styrène et/ou de α-méthylstyrène et
b₂₁) 5-50% en poids de (méth)acrylonitrile et/ou de (méth)acrylate de méthyle,
b₂₂) 0-40% en poids d'autres monomères.

4. Utilisation de masses à mouler thermoplastiques selon la revendication 2 ou 3 pour la préparation de feuilles et de corps moulés.
